# EUROPEAN PATENT APPLICATION

(11) **EP 1 887 526 A1**
(43) Date of publication of application: **13.02.2008**
(21) Application number: 06016868.9
(22) Date of filing: 11.08.2006
(51) Int. Cl.: G06T 15/70

(54) **A digitally-augmented reality video system**

(71) Applicant: Seac02 S.r.l., 10121 Torino (IT)
(72) Inventor: Carignano, Andrea, 10121 Torino (IT)
(74) Representative: Grünecker, Kinkeldey, Stockmair & Schwanhäusser Anwaltssozietät

(57) **Abstract**

A computer system is presented which is configured to store and display video-animated objects, re-rendering digital content objects according to the specific animation characteristics of the video-animated objects and superimposing the video-animated objects with the re-rendered digital content object. The digitally-augmented reality video system comprises means for storing an animated video content object, for example a movie of a model, means for generating virtual video meta-data from the animated video content object, means for storing a digital content object, means for re-rendering the digital content object according to the virtual video meta-data, and finally means for superimposing the displayed animated video content object along with the re-rendered digital content object at a predefined and tracked position. Previously-stored digital content objects, for example pictures, may thus be "naturally" integrated into a previously-produced "neutral" animated video content object.

## Description

Generally, the present invention relates to a computer system that is configured to store and display video-animated objects, re-rendering digital content objects according to the specific animation characteristics of the video-animated objects and superimposing the video animated objects with the re-rendered digital content object.

The rapid spread of digital content broadcasting channels like internet, digital TV, IP TV, mobile phones etc. have generated the need for efficient methods and systems for producing digital video content, i.e. digital streaming video content. As these different channels allow the broadcasting of streaming video content in a rather affordable manner - at least compared to traditional TV network broadcasting methods - the motivation to use streaming video content as broadcasting content as well as using streaming video content as just a part of a static content (e.g. an internet website) has risen dramatically.

One popular example of using streaming video content together with the above-mentioned digital broadcasting channels is the use of streaming video content object for the purpose of advertising within the context of an internet information service provider's website.

In that regard it is further known in the field of advertising that advertising tends to be most efficient if the display of advertising content is perceived by the audience or target group as entertaining and enjoyable rather than annoying and boring. In that respect, in particular with regard to advertisements placed within the content of internet websites, animated advertising content is generally known to be perceived by target groups as more entertaining and enjoyable compared to simple still images of advertised products/services. In addition, it is well-known that advertisements have to catch the attention of the respective user in order to develop their intended advertising impact. In addition, most of the content of an information service provider's website is not animated, thus in particular animated advertising content is known to be most suitable to catch the attention of a respective internet user.

To provide digitally-animated video content or rather streaming video content a variety of different techniques has emerged. These techniques range from filming and digitalizing a video to generating animated sequences based on digitally produced pictures. Although the variety of these techniques is rather extensive, they all are well-known to have the same common drawback: being relatively expensive to produce, in particular when compared to non-animated content, for example still images of a product.

This becomes particularly apparent when considering consumer product advertising: consumer product companies managing a broad portfolio of products have the problem that they might not be able to afford to produce animated advertising content for each and every product of their portfolio. Thus the ability of these companies to advertise their product portfolio based on digitally-animated video content can be rather limited.

The same considerations generally also apply to all of the above-indicated digital video content channels and generally to all forms of streaming video content or rather digitally-animated video content broadcasts. As the broadcasting itself has become more affordable, the motivation to use digital streaming video content has risen dramatically. However, according to the prior art, traditional producing methods are still in place, which render the production of varying content rather expensive. This is particularly true for the digital video broadcasting channels indicated above, since generally the user of these digital channels expects a rather individually-tailored broadcasting content - in contrast to the rather standardized mass content broadcast by traditional TV networks. According to the prior art, producing individualized streaming video content would, however, as indicated above within the context of advertising, result in the necessity to produce individual video content for at least every target group, thus multiplying the overall production cost and rendering the broadcasting of individualized digital streaming video content rather expensive, despite the broadcasting channels offering rather affordable broadcasting bandwidth.

Therefore, there is a need for an animated video content system and method that allows the creation and display of animated video content within the context of digital broadcasting channels with significantly reduced effort for producing animated video content for a particular target group.

According to one aspect of the present invention, this object is solved by a digitally-augmented reality video system comprising means for storing an animated video content object, for example a movie of a model, means for generating virtual video meta-data from the animated video content object, means for storing a digital content object, means for re-rendering the digital content object according to the virtual video meta-data, and finally means for superimposing the displayed animated video content object along with the re-rendered digital content object at a predefined and tracked position.

Consequently, according to the inventive digitally-augmented reality video system, previously-stored digital content objects, for example pictures, may be 'naturally' integrated into a previously produced 'neutral' animated video content object. A 'neutral' animated video content object may be, for example, a video of a model acting as if the model were carrying a particular product in his/her hand. These animated video content objects may therefore preferably be a real world video digitized according to the needs of digital broadcasting technology.

The inventive digitally-augmented reality video system further allows a digital content object to be re-rendered such that the re-rendered digital content object matches the virtual video meta-data generated from the 'neutral' animated video content object. The re-rendering is preferably performed in real-time based on the virtual video meta-data generated from every frame of the previously-produced animated video content object. Thus, the digital content object is re-rendered according to the virtual video meta-data such that the inventive augmented reality video system enables the re-rendered digital content object to be superimposed on and thus integrated into the displayed animated video content.

By re-rendering the digital content object according to the previously-generated virtual video meta-data, the appearance of the digital content object within the displayed animated video content may be achieved such that the re-rendered digital content object substantially matches the animation characteristics and, for example, the illumination conditions and viewing angles of the displayed animated video content. Besides matching the animation characteristics of the displayed animated video content, the illumination conditions, viewing angles and view points are however only preferred examples of relevant aspects of virtual video meta-data; other relevant aspects may also be taken into account for re-rendering the digital content objects without departing from the scope of the present invention. Moreover, by re-rendering the digital content object according to the animated video content object's virtual video meta-data, an appearance of the digital content object may be achieved such that the user may perceive the digital content object as a 'natural' part of the displayed animated video content, not substantially deviating from the overall appearance of the displayed animated video content. Thus, the inventive digitally-augmented reality video system allows the user to virtually produce animated video content or rather streaming video content without the need of having to produce video content for each and every target group for which broadcast of digital video content is intended. In contrast, the digitally-augmented reality video system allows the user to, for example, produce one 'neutral' animated video content object and at a different point in time integrate a variety of digital content objects into this animated video content object. Thus streaming video content is substantially generated for each target group by superimposing, for example, still images which can be generated at a low cost, thereby producing one single infinite video content feed in real time having the content of the neutral video animated content object superimposed with the re-rendered digital content object.

Thus the inventive digitally-augmented reality video system enables natural integration of digital content objects into pre-produced 'neutral' animated video content in a realistic manner which leads the viewer to perceive the streaming video content or rather video content feed having the superimposed re-rendered digital content object which is eventually displayed as a naturally-integrated consistent and coherent video content. Thus, in contrast to the above-described prior art, this allows the user to provide individualized digital animated video content or rather digital streaming video content, while at the same significantly reducing the effort necessary to produce the video content feed, since only one animated video content object has to be produced in order to generate a broad variety of streaming video content for a plurality of target groups.

In a further preferred embodiment, the particular digital content object chosen to be displayed is chosen based on information retrieved from a stored user profile, for example the particular animated video content context and/or the time of day. Thus, this further embodiment provides the benefit of displaying specific digital content objects, most suited to the particular user's interest and history.

In a further preferred embodiment, the digital content object may preferably be placed within a placeholder object, which is tracked within the animated video content object such that the placeholder object predefines the position of the digital content object throughout the animation sequence of the particular animated video content object.

In a further preferred embodiment, the digital content object to be re-rendered may be a movie and the re-rendering may be applied to any of the frames of the movie in real-time such that the re-rendering of the advertising movie is performed according to the frame sequence of the animated video content object.

In an even further embodiment, the displayed re-rendered digital content object is an advertising content object being enriched with vendor-specific meta-data allowing the virtual video system to redirect the user to the vendor's offering upon user request. This embodiment further provides the benefit of providing the user with a technique preferably most similar to a familiar internet link when used within the context of a website, enabling the user to directly click on or otherwise select the displayed re-rendered digital content object and thereby entering the specific vendor's product/service offer.

Further preferred embodiments are defined in the dependent claims and will also be described in the following with reference to the accompanying drawings, in which:
Figure 1 schematically shows a digitally-augmented reality video system in accordance with the present invention;
Figure 2a schematically illustrates the use of an optical marker;
Figure 2b schematically shows a displayed animated video content object superimposed with a re-rendered digital content object; and
Figure 2c schematically illustrates the identification of key points;
Figure 3 depicts a flow chart for illustrating the operation of the digitally-augmented reality video system.

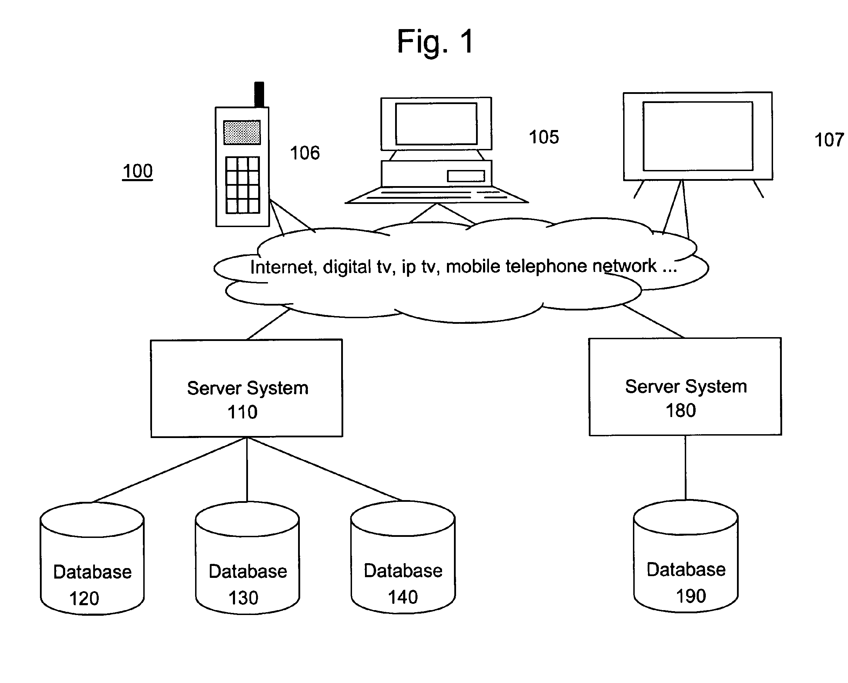

Figure 1 schematically shows a digitally-augmented reality video system 100 according to the present invention in a simplified illustration. The system 100 comprises preferably a user computer system 105 and/or a mobile telephone 106 and/or a TV set 107, configured for receiving and displaying digital streaming video content, for example digital TV content and/or IP TV content. The computer system 105, the mobile telephone 106 and the TV set 107, serve as receiver and display devices for digital streaming video content. Therefore any of these devices or similar devices, a combination and/or virtually any number of these devices known from the prior art could be incorporated into the system 100 without departing from the scope of the invention. Thus the depicted receiving devices and their number only serve as illustrative examples of suitable receiver/display devices, which generally could be any suitable end user device, configured for receiving and displaying digital streaming video content. For example, TV set 107 could also be a conventional analog TV set, supplemented with a digital set-top box, wherein the set-top box is configured for receiving and transforming streaming video content such that a conventional TV set can display the transformed content.

The receiver/display devices 105-107 are connected via a digital broadcasting channel, for example the internet, to a server system 110. The internet as the digital broadcasting channel, however, is only one of several alternative digital broadcasting channels that may be used without departing from the scope of the present invention. In particular, the present invention is equally applicable to other digital broadcasting channels and protocols such as, for example, digital TV, IP TV, mobile telephone networks and so on. Therefore the broadcasting channel "internet" as depicted in Fig. 1 only serves as one of several alternative digital broadcasting channels or techniques which are not illustrated separately only in order to avoid unnecessary repetition.

Furthermore, in one preferred embodiment, server system 110 could be embodied into a digital set-top box itself, which would be configured for performing the features of server system 110 such that the digital content, preferably streaming video content, is received via a digital broadcasting channel by the set-top box and then superimposed with digital content objects stored within a database to which the set-top box has access. For this specific embodiment the depicted broadcasting channel would be the video signal line between the set-top box and a displaying device like, for example, a TV set.

The server system 110 has access to a number of databases 120, 130 and 140. In a further preferred embodiment however, also receiver/display devices 105-107 may have directly or through server system 110 access to databases 120, 130 and 140. The number of databases, however, is rather illustrative and can vary in different embodiments of the present invention. In the preferred embodiment illustrated in Figure 1, database 120 stores pre-produced animated video content objects. Furthermore, the illustrated server system 110 is configured to analyze the animated video content objects stored in database 120 with respect to their animation characteristics, and furthermore, for example, the illumination conditions and viewpoints/viewing angles of the animated video content, and to generate virtual movie meta data based upon that analysis.

In a preferred embodiment, server system 110 is configured to generate the virtual movie meta data for each frame of a particular animated video content object. The variation or change of the virtual movie meta data from frame to frame of the particular animated video content object may preferably be captured by variation vectors for each relevant variable of the virtual movie meta data. To generate virtual movie meta data from a frame of a particular animated video content object, server system 110 is preferably configured to use an optical tracking technique. In another preferred embodiment however, server system 110 is configured to delegate performing of the tracking to any of the end user devices 105-107. Thus, alternatively any of the end user devices 105-107 could be configured for performing the optical tracking, for example by having corresponding software installed.

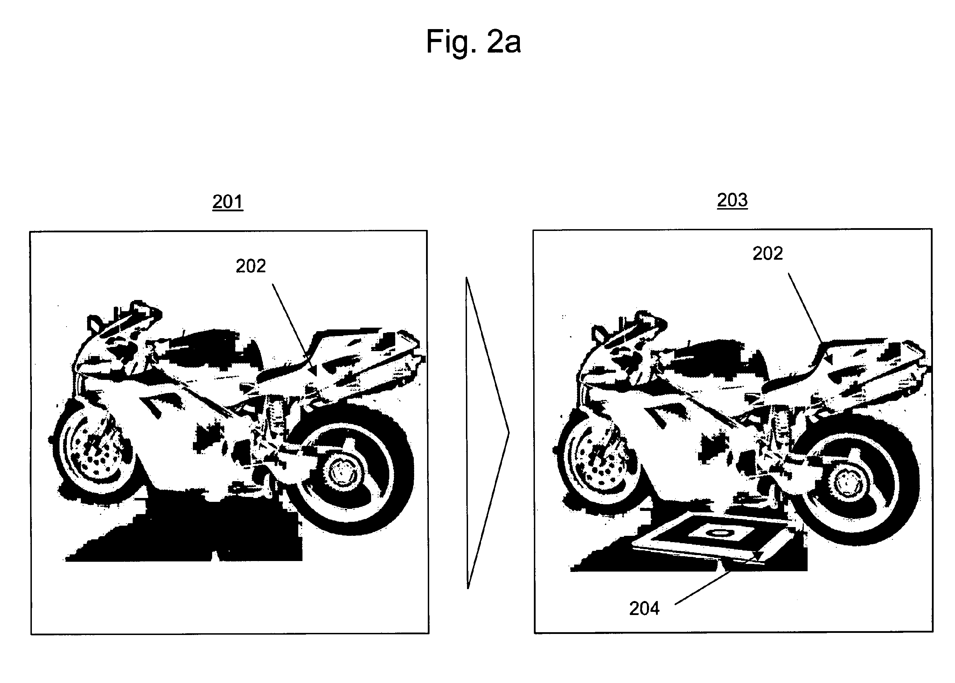

To perform the optical tracking in one preferred embodiment, server system 110 or alternatively any end user device 105-107 relies on an "optical marker" which may be placed anywhere in a scene or scenery which is then filmed to produce a streaming video or animated video content object which shows that scene. Figure 2a schematically illustrates the use of such a marker. In particular, Fig. 2a shows scenery 201 which differs from the scenery 203 only in the aspect that in scenery 203 an optical marker 204 is positioned beneath the indicated motor cycle 202. The particular geometrical shape and the color scheme of the optical marker 204 as illustrated in Figure 2a is, however, only one of several possible embodiments of an optical marker, in this embodiment an optical marker with rectangular shape, showing rectangular dark and light areas with colors of a high contrast. Other geometrical shapes and other color schemes could also be used to create an optical marker configured for use with the present invention. Therefore the illustrated optical marker is only one preferred embodiment, whereas other shapes of optical markers, in particular markers of any shape, color, texture, and further also images, logos, or any kind of defined physical object could be used without departing from the scope of the invention.

For generating virtual video meta data, server system 110 is further configured to analyze the scene of a frame of a particular streaming video to identify special patterns, such as, for example, a particular logo, a special texture and/or a particular symbol. As an optical marker similar to the one illustrated in Figure 2a apparently qualifies as a special pattern in that sense, server system 110 in particular is configured to identify the optical marker in any of the frames of a streaming video. However in another preferred embodiment, in addition or alternatively to the above-described "special pattern", server system 110 is configured to identify key points of the scenery that has been filmed. In this sense, for example, edges of objects, a hand or a face or any other particular graphic scheme from which a priori the geometric shape is generally known qualifies as a key point. In this preferred embodiment, server system 110 is therefore configured to analyze each frame of a particular streaming video to identify key points by comparing the geometric shape of identified objects with predefined geometric characteristic or rather shapes of various objects. The comparison is preferably conducted using a fuzzy comparison scheme.

In any of the above-described embodiments, server system 110 is further configured to detect the position of the optical marker object, special pattern and/or key points. Furthermore server system 110 is adapted to calculate the position of the detected object or pattern with all six degrees of freedom relative to the camera which has filmed the scenery. Thus server system 110 is not only configured for identifying a marker object, special pattern and/or key point but also to calculate and thus "describe" the position of that object relative to the camera position of the camera which has filmed the scene. Server system 110 is in particular configured to perform this calculation for any of the frames of a streaming video. The variation of this position data or rather the position matrix is an additional part of the virtual movie meta data. Thus server system 110, or in a further preferred embodiment any of the end user devices 105-107 additionally or alternatively is configured to render a digital content object according to this position matrix which thereby enables server system 110 to re-render the digital content object in particular with respect to viewing angles and points of view within six degrees of freedom.

Thus, server system 110 is, for example, configured to analyze the spatial relationships of the various objects forming part of the animated video content, for example, furniture and/or a model. Preferably the analysis is based on analyzing each frame of the animated video content object. In a preferred embodiment each frame thus is analyzed by server system 110 as if it were one still image being analyzed to generate virtual video meta-data. Moreover, as the several frames of the animated video content object are combined within the video-animated video content object into an animated sequence, the relative variation of the animation characteristics, the spatial relationships, the illumination conditions and the viewpoints/viewing angles are analyzed. Thus, server system 110 is configured to generate, based upon analyzing the original animated video content objects, mutation and gradients of various parameters which are relevant to the virtual video meta-data. In addition, server system 110 is configured to generate, based upon the analyzed gradient mutation, mutation vectors that are a part of the virtual video meta-data. Thus, server system 110 is configured to generate from the analysis of the original animated video content object, virtual video meta-data comprising information about spatial relationships, points of view, viewing angles, illumination, their relative mutation throughout the animation sequence, respective gradients and mutation vectors, as well as other relevant conditions of the original animated video content.

The virtual video meta-data corresponding to a particular animated video content object is stored in database 120 in a specific format which is configured to comprise, besides the animation information about the animation characteristics of the animated sequences of the animated video content frames, lighting information of the entire animated video content object. Preferably the lighting information consists of, among others, diffuse light intensity and a specular light map. Thus, the information stored in the virtual video meta-data enables the virtual illumination of reflecting surfaces, such as, for example, metal, glass and others, so that a respective surface matches the natural lighting conditions of a respective animated video content.

In particular, server system 110 is configured to analyze each frame of a streaming video with respect to illuminated areas and shadow areas. By analyzing the light and shadow conditions of a frame, server system 110 is further configured to identify sources of light and the position of sources of light. Moreover, server system 110 is configured to analyze the contrast and the image sharpening. However, light and shadow, contrast and sharpening are only exemplary elements of a frame analysis performed by server system 110. Additional variables could be analyzed without departing from the scope of the invention. In addition to the above-described elements, server system 110 could be further configured to analyze not only the position of sources of light, but also the color, the intensity, etc. of the emitted light or the light illuminating the scenery. Based on the analysis of each frame, server system 110 is further configured to calculate the variation and change gradient of each variable from frame to frame. Based on that, server system 110 is preferably configured to calculate a variation matrix of these variables which again may be part of the virtual movie meta data. Thus, server system 110, or in a further preferred embodiment any of the end user devices 105-107 additionally or alternatively is configured to render a digital content object according to this variation matrix of the lighting condition of a streaming video, which thereby enables server system 110 to re-render the digital content object in particular with respect to changing lighting conditions of each frame of the animated video content.

Preferably, server system 110 is further configured to place within the animated video content object stored in database 120 a placeholder object which defines a position and size that is designed to contain a re-rendered digital content object. Preferably, the placeholder object is positioned such that the server system 110 can be configured to track the relative position of the placeholder object within the animated video content object and in particular the animation scheme and characteristics of the animated video content object.

In a preferred embodiment, the animated video content object is created such that for, example, a human being as a model acts as if the model were holding a particular product, for example a mobile phone, in his/her hand. In that preferred embodiment server system 110 is configured to created within the particular animated video content object, preferably a digitized video of the model, a placeholder object that is placed at the position within the animated video content object that would be taken by such a product, in this example the mobile phone. Moreover, server system 110 is configured to dynamically resize and reconfigure the placeholder object and change the inherent orientation characteristics of the placeholder object as well as the shape and angles of the placeholder object within every frame of the animated video content object such that at least the spatial characteristics of the size of placeholder object matches the animation characteristics of the animated video content, in particular in this example the movements of the model. In a preferred embodiment, a model may for example be acting as if the model were holding a mobile phone in his/her hand and further the model may move so that the hand supposed to hold the mobile phone may have different distances to the camera filming the scene, resulting in the hand having different sizes corresponding to that distance. Moreover, in this particular example, the angle of the hand relative to the camera's viewing point may also vary. Accordingly, in this example, the inventive server system 110 would preferably be configured to change the size and angles of the placeholder object such that the size and angles substantially match the respective changes of the hand of the model induced by the model's movements.

Furthermore, database 130 stores digital content objects, for example, pictures of products, comic figures, movie characters and/or movies. Preferably the digital content objects are stored as 3-dimensional CAD models and/or 3-dimensional scan data. Preferably the 3-dimensional objects comprise textures. Based on these textures, server system 110, or in a further preferred embodiment any of the end user devices 105-107 additionally or alternatively is configured to calculate, corresponding to the above described variation matrix of the lighting condition, reflection images in order to adjust the appearance of the (re-rendered) digital content object to the specific lighting condition of the filmed scenery. However, apart from various 3-dimensional, textured data objects, digital content objects may also be stored in the format of video streams, images, and vector images. However, these different and alternative formats of a digital content object to be stored rather serve as only illustrative examples. Other formats could be used without departing from the scope of the invention.

Preferably, server system 110 is configured to store, in addition to the actual digital content object (e.g. a movie or a still image), material properties of these objects. The material properties preferably reflect the surface material of the digital content object such that this information can be used to generate the virtual illumination for the digital content object. Therefore, material properties preferably determine how a respective digital content object is illuminated, for example answering the question whether the object has a reflecting surface, a metal surface, a glass surface etc.

In addition, database 130 stores link meta-data or rather digital content object meta-data, together with a particular digital content object which may preferably comprise, for example in the case of an advertising object, link information about a vendor's catalogue, for example a vendor's website, as well as the relevancy of the particular digital content object with respect to a specific animated video content context, user attributes and time of day. However, these specific meta-data features are rather exemplary and other implementations according to the present invention may choose additionally or alternatively other meta-data. In addition, database 140 stores user profiles. In that respect, the server system 110 is preferably configured to enable a user, who is receiving and watching the digital streaming video content or rather the animated video content generated by server system 110 via any of the receiving/displaying devices 105-107, to register for the specific broadcasting service. The registration could preferably be, for example, the registration for a website as well as, for example, the registration for a subscription-based digital TV broadcasting service. These examples of a registration are therefore rather illustrative and other methods for establishing a "registration" feature may be employed without departing from the scope of the invention. Several alternative methods and techniques are known in the prior art which allow the registration of a particular user for a service, wherein the registration afterwards serves for identifying the particular user when making use of the service and storing/analyzing the particular user history in order to identify particular fields the user might be specifically interested in.

Following the registration, the server system 110 is configured to track the user's activities, content request and consumption habits and the like, to generate a history of these activities. Specific user attributes such as, for example, age, location, traveling habits and so on, together with the user's activity history, may be stored by server system 110 in a retrievable digital format in database 140. The server system 110 is then configured to enable a user, via suitable content request and/or information retrieval tools to access specific contents matching the content and/ or information needs of the specific user. Furthermore, server system 110, or in a further preferred embodiment any of the end user devices 105-107 additionally or alternatively is preferably configured to retrieve, in response to the user's request, specific information from the user's profile stored in the database 140. Moreover, server system 110, or in a further preferred embodiment any of the end user devices 105-107 additionally or alternatively is preferably configured to generate, based on a particular user's profile stored in database 140, the time of day and/or the specific content and/or information requested by the user, a relevancy measure which allows the server system 110, or in a further preferred embodiment any of the end user devices 105-107 additionally or alternatively to identify an animated video content object stored in database 120 and in addition to identify a particular digital content object stored in database 130 that most closely matches the calculated relevancy measure.

In that respect, server system 110, or in a further preferred embodiment any of the end user devices 105-107 additionally or alternatively is configured to identify animated video content objects and digital content objects respectively with respect to which digital content objects are suited to be superimposed on specific animated video content objects. For example, an animated video content object showing a human being as a model acting as if the model were holding a mobile phone in his/her hand would not be suitable to have super-imposed on a product depiction of a big suitcase instead of a product picture of a mobile phone. Therefore, server system 110 is configured to classify digital content objects showing particular classes of products, preferably classified for example with respect to their size and weight, and using characteristics with respect to different animated video content objects which are also preferably classified by server system 110 with respect to the classes of digital content objects suitable for being superimposed onto these animated video content objects. Thus, the inventive digitally-augmented reality video system provides the specific benefit that a digital content provider may pre-produce several animated video content objects, with regard to different classes of digital content objects being suitable to be integrated into these animated video content objects. Moreover, the inventive system allows to pre-produce several different kinds of animated video content objects that may be suitable for broadcasting different classes of digital content objects for different kinds of users and/or target groups.

For example, in the case where the animated video content is an advertising content intended to advertise mobile phones to male users, it might be found more efficient by the advertising company to use a female model. In contrast, when advertising mobile phones to female users, it may be found more attractive for the advertising company to use a male model. Moreover, not only the genders of models may be varied but also contexts - for example, furniture, lighting conditions, natural environments and so on may be varied with respect to different kinds of users. Therefore, the inventive digitally-augmented reality video system offers the specific benefit of being able to specifically advertise a variety of products in an animated context most suited to a particular user, while at the same time avoiding the effort of producing a vast variety of expensive video content objects. Indeed, a rather limited number of animated video content objects may be produced that fit certain user characteristics and can be combined with the inventive digitally-augmented reality video system with a variety of different classes of products, such that a huge number of different video animated contents are generated, all of which seem to be, from a consumer's perspective, individually produced.

In another example, assuming for example the case of a TV show, the animated video content or rather digital streaming video content is the "neutrally" produced video show, moderated for example by a show master. In this case, server system 110, or in a further preferred embodiment any of the end user devices 105-107 additionally or alternatively is configured to superimpose the streaming video content, i.e. the neutrally produced TV show, with a digital content object which might for example be a comic character. Further, in that preferred embodiment server system 110, or in a further preferred embodiment any of the end user devices 105-107 additionally or alternatively is configured for choosing for example a comic character matching any particular user's preferences as identified with the help of the above described relevancy measure.

In one further preferred embodiment, server system 110 is configured to retrieve first a digital content object stored in database 130 that has been identified to match the generated relevancy measure. In response, server system 110 is preferably configured to retrieve an animated video content object stored in database 120 that has been identified to match the digital content object class of the retrieved digital content object. In addition, in case more than one animated video content object is available that matches the identified digital content object class, server system 110 is preferably configured to retrieve the particular matching animated video content object that best matches the generated relevancy measure.

However, in another preferred embodiment, for example in the above-described case of a TV show, the animated video content object can also be fixed, such that server system 110, or in a further preferred embodiment any of the end user devices 105-107 additionally or alternatively only identifies and retrieves the digital content object best matching the calculated relevancy measure and the (fixed) animated video content object. Therefore the step of identifying an animated video content object with respect to the animated video content object matching the relevancy measure can be omitted, without departing from the scope of the invention. Rather, this step can be optionally incorporated into certain embodiments of the invention, in order to even further enhance the ability to produce tailored digital video content with reduced effort.

Moreover, server system 110, or in a further preferred embodiment any of the end user devices 105-107 additionally or alternatively is prepared to re-render the digital content object to match the virtual video meta-data stored in database 120 according to the particular animated video content object. In particular, server system 110, or in a further preferred embodiment any of the end user devices 105-107 additionally or alternatively is configured to retrieve, together with the digital content object, the corresponding material properties stored in database 130. Moreover, the server system 110, or in a further preferred embodiment any of the end user devices 105-107 additionally or alternatively is configured to use the material properties, the virtual video meta-data, and the intended three-dimensional (3D) position of the digital content object within the animated video content object to re-render the digital content object.

In this regard, server system 110 comprises means for a tracking system that performs the tracking of the digital content object in an optical way such that server system 110 recognizes a tracking pattern, for example a piece of the texture within the animated video content. In addition, server system 110 is configured to alternatively synthetically generate the tracking pattern such that the tracking pattern can be positioned inside the animated video content. The digital content object which is intended to superimpose the animated video content object is preferably positioned within the animated video content relative to the detected tracking pattern. In particular the tracking system preferably returns a 3D-position and a 3D-mutation matrix. The server system 110 is then prepared to position the digital content object relative to these coordinates. The transformation relative to the tracking pattern is preferably included in the animated video content data or the virtual video meta-data.

In a further, preferred and rather alternative embodiment, server system 110 is configured to delegate performing of the tracking to any of the end user devices 105-107. For example, computer 105 could be preferably configured by, for example, having installed respective software, to receive via any of the above-indicated broadcasting channels the neutral streaming video content. In response to receiving the neutral video content, computer 105 would be configured for performing the tracking as described above. In particular, in this preferred embodiment, computer 105 and/or any other end user device 105-107, and/or, for example, a set-top box of TV 107, comprises means for a tracking system that performs the tracking of the digital content object in an optical way such that the end user device 105-107 recognizes a tracking pattern, for example a piece of the texture within the animated video content. In addition, the end user device 105-107 is configured to alternatively synthetically generate the tracking pattern such that the tracking pattern can be positioned inside the animated video content. The digital content object which is intended to superimpose the animated video content object is preferably positioned within the animated video content relative to the detected tracking pattern. In particular, the tracking system preferably returns a 3D-position and a 3D-mutation matrix. The end user device 105-107 is then prepared to position the digital content object relative to these coordinates. The transformation relative to the tracking pattern is preferably included into the animated video content data or the virtual video meta-data in real time.

Server system 110, or, as indicated above in a preferred embodiment, any of the end user devices 105-107, is further preferably configured to super-impose the displayed animated video content object with the re-rendered digital content object and to further display the animated video content object as superimposed with the re-rendered digital content object at any of the user's receiving/displaying devices 105-107. As indicated above, the animated video content object preferably comprises a placeholder object which defines a position and size that is designed to contain a re-rendered digital content object. Preferably the placeholder object is positioned such that the server system 110, or in a further preferred embodiment any of the end user devices 105-107 additionally or alternatively can be configured to track the position of the placeholder object relative to the animated video content object's animation. In a preferred embodiment, the position and size of the placeholder object is based upon the position of an "optical marker" which may be placed anywhere in a scene or scenery which is then filmed to produce a streaming video or animated video content object which shows that scene. Figure 2a schematically illustrates the use of such an optical marker. In particular Fig. 2a shows scenery 201 which differs from the scenery 203 only in the aspect that in scenery 203 an optical marker 204 is positioned beneath the indicated motor cycle 202. The particular geometrical shape and the color scheme of the optical marker 204 as illustrated in Figure 2a is, however, only one of several possible embodiments of an optical marker, in this embodiment an optical marker with rectangular shape, showing rectangular dark and light areas with colors of a high contrast. Other geometrical shapes and also other color schemes could be used to create an optical marker configured for use with the present invention. Therefore the illustrated optical marker is only one preferred embodiment, whereas other shapes of optical markers, in particular markers of any shape, color, texture, and further also images, logos, or any kind of defined physical object could be used without departing from the scope of the invention.

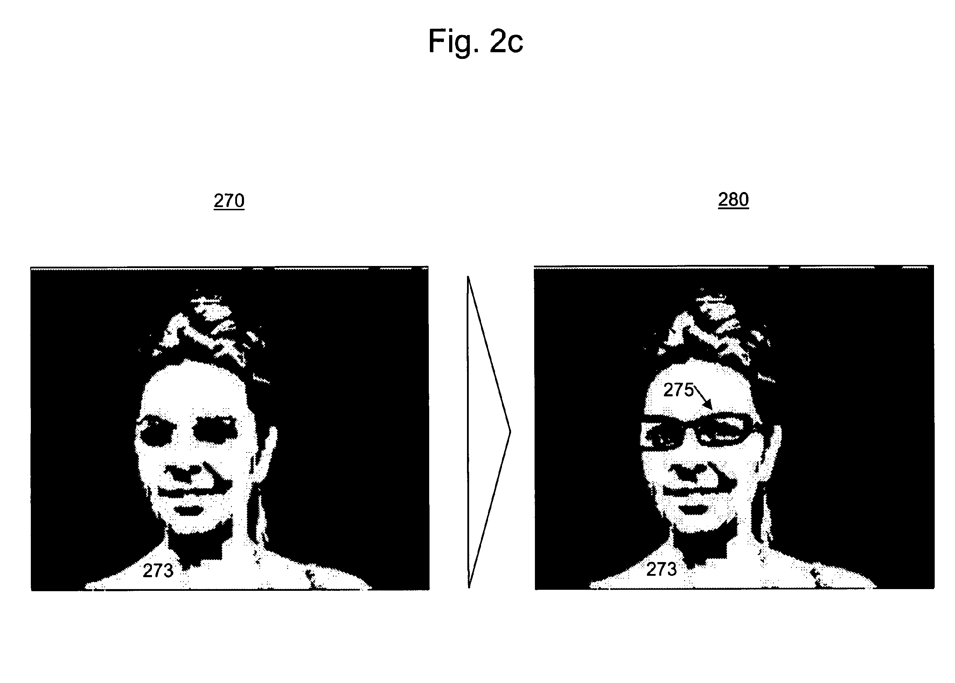

However, alternatively or in addition to generating a placeholder object based upon a marker object which is placed in and filmed together with the real life scenery, server system 110 is preferably configured for generating and positioning a placeholder object based upon identified special patterns, such as, for example, a particular logo, a special texture and/or a particular symbol. As an optical marker similar to the one illustrated in Figure 2a apparently qualifies as a special pattern in that sense, server system 110 is in particular configured to identify any optical marker and/or any special pattern within any of the frames of a streaming video. However in another preferred embodiment, in addition to or as an alternative to the above-described "special pattern", server system 110 is configured to identify key points of the scenery that has been filmed. In this sense, for example edges of objects, a hand or a face or any other particular graphic scheme from which a priori the geometric shape is generally known qualifies as a key point. In this preferred embodiment, server system 110 is therefore configured to analyze each frame of a particular streaming video to identify key points by comparing the geometric shape of identified objects with predefined geometric characteristic or rather shapes of various objects, with the comparison preferably being conducted using a fuzzy comparison scheme. Figure 2c schematically illustrates the use of such key points. In particular Fig. 2c shows scenery 270 which differs from the scenery 280 only in the aspect that in scenery 270 the face and in particular the eyes of model 273 have been identified as key points by server system 110 and according to that in scenery 280 server system 110 has generated and positioned a placeholder object 275 superimposed on the scenery, wherein the placeholder object in this particular example corresponds to the digital object class of "eyeglasses".

In any of the above described embodiments, server system 110 is further configured to detect the position of the optical marker object, special pattern and/or key points and the change of the viewing angles, points of view and relative size of these features. Based on that, and additionally taking into account the general, relative size of the intended class of digital content object intended to be integrated or rather superimposed on the scenery, server system 110 is configured to generate a placeholder object, position the placeholder object in a predefined position relative to the identified optical marker object/special pattern/key point and to vary the geometric shape, angles, size etc. of the placeholder object according to the identified changes of the marker object/special pattern/key point from frame to frame of the animated video content object.

The server system 110 is further configured to track the position of the placeholder object such that the relative position of the placeholder object remains substantially the same. In an alternative embodiment, the relative position may change depending on the specific animated video content object's animation characteristics. For example, the placeholder object may be positioned such that the position remains substantially the same relative to the hand of a model moving the hand around within a video sequence. Alternatively, however, assuming a moving object such as, for example, a ball, the placeholder object may change its position relative to, for example, the hand of a model as the model is supposed to drop the ball. The particular position of the placeholder object and in particular the relative change of that position throughout the animation sequence of the animated video content object may change in different embodiments of the present invention.

In a preferred embodiment, server system 110 is further configured to perform the tracking of the, placeholder object in an optical way such that server system 110 recognizes the tracking pattern, for example a piece of texture of the animated video content. In addition, server system 110 is configured to alternatively synthetically generate a tracking pattern such that a tracking pattern can be positioned inside the streaming video content. The placeholder object which is superimposed onto the animated video content thereby augments the animated video content displayed and is preferably positioned within the animated video content relative to the detected tracking pattern. In a preferred embodiment, the placeholder object could be positioned such that it is always oriented perpendicularly to the viewing ray. In an alternative preferred embodiment, the placeholder object could be positioned in a fixed transformation relative to the detected tracking pattern. In this respect, the server system 110 is configured to perform the recognition as well as the synthetic generation of the tracking pattern such that all six degrees of freedom relative to the eye position are returned.

In a further, preferred and rather alternative embodiment, server system 110 is configured to delegate performing of the tracking to any of the end user devices 105-107. For example computer 105 could preferable be configured, by for example having installed respective software, to receive via any of the above indicated broadcasting channels the neutral streaming video content. In response to receiving the neutral video content, computer 105 would be configured for performing the tracking as described above. In particular, in that preferred embodiment computer 105 and/or any other end user device 107-107, and/or for example also a set-top box of TV 107, comprises means for tracking the placeholder object in an optical way such that the end user devices 105-107 recognizes the tracking pattern, for example a piece of texture of the animated video content. In addition, the end user devices 105-107 is configured to alternatively synthetically generate a tracking pattern such that a tracking pattern can be positioned inside the streaming video content. The placeholder object which is superimposed to the animated video content thereby augments the animated video content displayed and is preferably positioned within the animated video content relative to the detected tracking pattern. In a preferred embodiment the placeholder object could be positioned such that it is always oriented perpendicularly to the viewing ray in an alternative preferred embodiment the placeholder object could be positioned in a fixed transformation relative to the detected tracking pattern. In that respect the end user devices 105-107 is configured to perform the recognition as well as the synthetically generation of the tracking pattern such that all six degrees of freedom relative to the eye position are returned.

Thereby a user is displayed an animated video content that has superimposed a virtual digital content object that through the re-rendering performed by server system 110, or in an alternative preferred embodiment performed by any end user devices 105-107 as described above, is naturally integrated into the animation context of the displayed animated video content object, matching the virtual video meta-data, in particular the animation characteristics, the illumination angle point view/viewing angle conditions of the particular animated video content object.

In a further preferred embodiment, the digital content object may also be a movie. In this embodiment, the placeholder object is prepared to contain and display a re-rendered movie superimposed onto the animated video content object such that the user perceives the movie as a natural part of the animated video content. Preferably server system 110 is therefore configured to correlate and assign each frame of a particular movie to a respective frame of the animated video content object. Moreover, server system 110, or in a further preferred embodiment any of the end user devices 105-107 additionally or alternatively is preferably configured to re-render the assigned frames of the movie in real time depending on the assigned animated video content object's frame displayed to the user at that particular point in time.

Moreover, in one particular embodiment, where the animated video content is displayed within the context of an internet website, the server system 110 is preferably configured to track the mouse point movement activities of the particular user in a preferred embodiment operating a personal PC 105. In particular, server system 110 is preferably configured to identify whether or not a particular user clicks on the displayed re-rendered digital content object with a mouse pointer device. In case server system 110 identifies a user click on the displayed re-rendered digital content object, the server system 110 is configured to redirect the user to a particular vendor's server system 180 that, based on the content stored in the database 190, is configured to provide the user with access to the particular vendor's product/service offer and catalogues. In that regard, server system 110 is configured to determine whether the digital content object was clicked on by the user. Preferably the server system 110 uses ray object intersections to perform this task. In case the server system 110 detects that a user has clicked on the digital content object, the server system 110 is configured to open up the vendor content responding to the digital content object that is stored in the digital content meta-data. In one preferred embodiment, the server system 110 opens the respective vendor content within its own realm. Alternatively the server system 110 may be configured to trigger a signal which is externally connected to an appropriate action, e.g. to open a new web browser window.

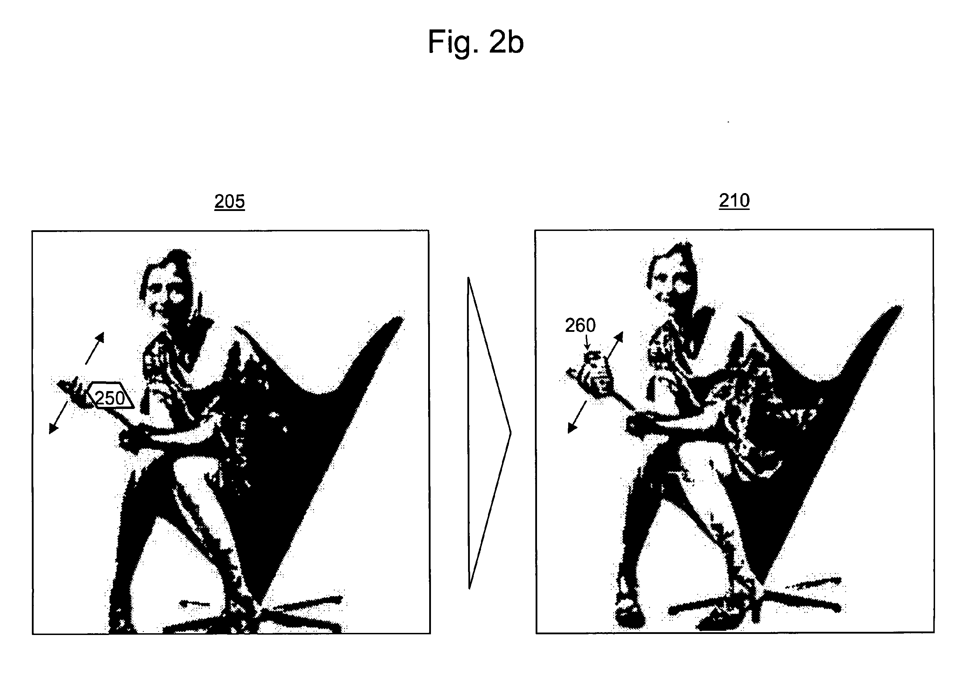

Figure 2b schematically shows an animated video content object 205 which has integrated a place holder object 250 superimposing animated video content 205. The arrows in animated video content object 205 and 210 respectively hint at the potential animation scheme, in this illustration in particular the movement of the model's hand. The placeholder object 250 is preferably placed in a position in the animated video content object 205 that corresponds to the natural use of the class of digital content objects that is intended to be displayed within the context of the particular animated video content object 205. Moreover, Figure 2b shows the animated video content object 210, which has had superimposed on it the digital content object of a mobile phone 260 which has been re-rendered as described above with reference to Figure 1. As can be seen, the animated video content object 205 is preferably configured such that the re-rendered digital content object 260 can be inserted into the position marked by placeholder object 250. In a preferred embodiment, the tracking of the placeholder object is performed in an optical way such that a tracking pattern is recognized, for example a piece of texture of the animated video content. Alternatively the tracking pattern might be generated synthetically such that a tracking pattern can be positioned inside the animated video content. The placeholder object superimposed onto the animated video content thereby augments the animated scene displayed and is preferably positioned within the animated content relative to the detected tracking pattern. In one preferred embodiment, tracking and superimposing is performed by server system 110; alternatively, however, in another preferred embodiment tracking and superimposing might also be performed by any of the end user devices 105-107, as indicated in Figure 1. In a preferred embodiment, the placeholder object could be oriented perpendicularly to the view; in an alternative preferred embodiment, however, the placeholder object may be positioned in a fixed transformation relative to the detected tracking pattern. In that regard the tracking system is configured to perform the recognition as well as the synthetic generation of the tracking pattern such that all six degrees of freedom relative to the eye position are returned.

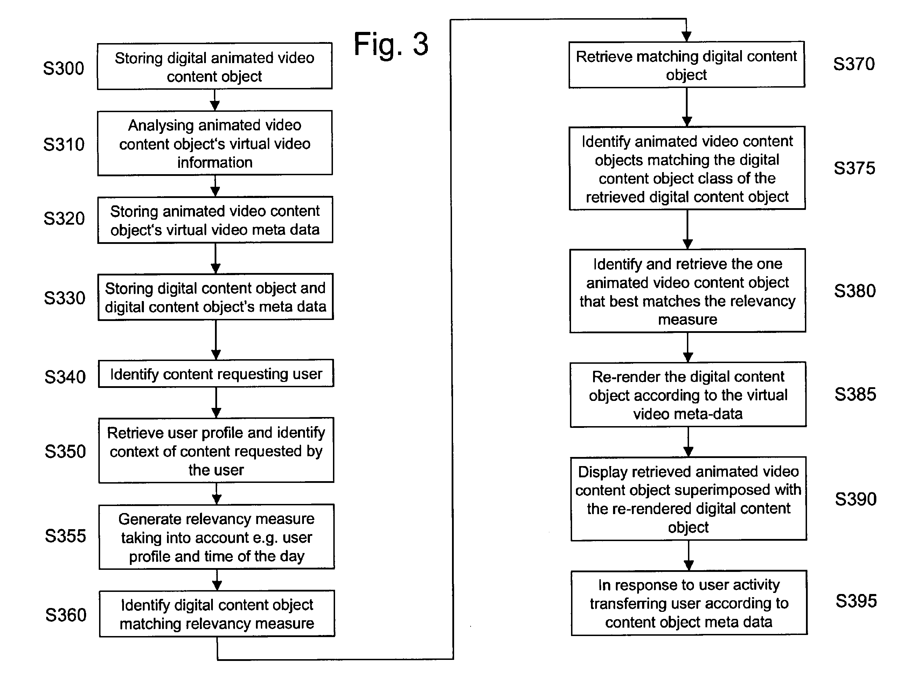

Figure 3 depicts a flow chart for illustrating the configuration of the inventive digitally-augmented reality video system. In step 300, digital animated video content objects are stored in database 120. Moreover, in step 310 these stored animated video content objects are analyzed by computer system 110 with respect to the virtual video meta-data, in particular animation characteristics, point of view/viewing angle and illumination information, thus generating virtual video meta-data that is stored in step 320 together with the animated video content object. Moreover, in step 330 a digital content object and content object meta-data are stored in database 130. In one preferred embodiment, in particular in the case where the digital content object is an advertising object, the content object meta-data may, for example, comprise information about the internet address of the specific vendor's website and/or a catalogue and product/services. In step 340 a content requesting user is identified. Based on the identifying of the requesting user in step 340, in step 350 the specific user's profile is retrieved and the context of the content requested by the user is identified. In step 355 a relevancy measure is generated, taking into account the specific user's profile, the requested content's context and, for example, the time of day. Based on the relevancy measure, in step 360 a digital content object is identified which matches the relevancy measure. Moreover, in step 370 a specific digital content object is retrieved which has been identified in step 360. In step 375, one or more animated video content objects are identified which match the digital content object class of the retrieved digital content object. In step 380, in case more than one animated video content object is identified that matches the retrieved digital content object's class, the particular animated video content object that best matches the relevancy measure generated in step 355 is identified and retrieved. However, as indicated above within the context of Fig. 1, the steps S375 and S380 are only optional. In one preferred embodiment, for example a TV show digitally broadcast, the animated video content is a priori fixed and thus steps S375 and S380 can be omitted without departing from the scope of the invention. In step 385, the digital content object is re-rendered to match the animated video content's meta-data, in particular with respect to the animation characteristics, the illumination conditions and/or the point of view/viewing angles of the animated video content object retrieved in step 380. In step 390, the animated video content object is displayed having been superimposed with the re-rendered digital content object. When the user clicks on the displayed re-rendered digital content object or otherwise selects the displayed digital content object with an appropriate activity, the user is transferred according to the information stored in the advertising content meta-data in step 395.

## Claims

1. A digitally-augmented reality video system comprising:
means for storing at least one animated video content object;
means for generating virtual video meta-data from the animated video content object;
means for storing at least one digital content object;
means for re-rendering the digital content object according to the virtual video meta-data; and
means for superimposing the displayed animated video content object with the re-rendered digital content object at a predefined position.

2. The system according to claim 1, wherein the animated video content object is a movie containing a plurality of frames wherein the sequence of frames generates an animation sequence.

3. The system according to one of claims 1 or 2, wherein superimposing comprises integrating the digital content object such that the display of the digital content object naturally blends into the display of the animated video content object.

4. The system according to one of claims 1 to 3, wherein the digital content object is a still image.

5. The system according to one of claims 1 to 3, wherein the digital content object is a movie.

6. The system according to claim 5, wherein superimposing comprises integrating the movie into the display of the animated video content object such that every frame of the movie is assigned to a frame of the animated video content object and each digital content object frame is re-rendered in real-time according to the virtual video meta data of the assigned animated video content object frame.

7. The system according to one of claims 1 to 6, wherein the system further comprises:
means for storing a user profile;
means for interpreting the context of the animated video content requested by a user; and
means for choosing a digital content object to be displayed based on at least one of the stored user profile, an animated video content context and/or the time of day.

8. The system of claim 7, wherein the system further comprises means for choosing an animated video content object to be displayed based on a digital content object class of the chosen digital content object and at least one of the stored user profile, an animated video content context and/or the time of day.

9. The system according to one of claims 1 to 8, wherein the system further comprises means for integrating and tracking a placeholder object within the animated video content object and wherein the digital content object is positioned within the placeholder object being displayed.

10. The system according to one of claims 1 to 9, wherein the position of the digital content object is tracked within the animated video content object such that the digital content object is re-rendered matching the virtual video meta-data according to the viewing angle of the frame of the animated video content object currently being displayed.

11. The system according to claim 5, wherein the digital content object is re-rendered such that any of the frames of the movie is re-rendered in real-time.

12. The system according to any of claims 1 to 11, wherein the system further comprises means for redirecting a user upon request wherein the displayed digital content object is enriched with meta-data such that the augmented reality video system redirects the user upon request according to the meta-data.

13. A method for generating and displaying digitally-augmented reality video content, comprising the steps of:
storing at least one animated video content object;
generating virtual video meta-data from the animated video content object;
storing at least one digital content object;
re-rendering the digital content object according to the virtual video meta-data; and
superimposing the displayed animated video content object with the re-rendered digital content object at a predefined position.

14. The method according to claim 13, wherein the animated video content object is a movie containing a plurality of frames wherein the sequence of frames generates an animation sequence.

15. The method according to one of claims 13 or 14, wherein super-imposing comprises integrating the digital content object such that the display of the digital content object naturally blends into the display of the animated video content object.

16. The method according to one of claims 13 to 15, wherein the digital content object is a still image.

17. The method according to one of claims 13 to 15, wherein the digital content object is a movie.

18. The method according to claim 17, wherein superimposing comprises integrating the movie into the display of the animated video content object such that every frame of the movie is assigned to a frame of the animated video content object and each digital content object frame is re-rendered in real-time according to the virtual video meta data of the assigned animated video content object frame.

19. The method according to one of claims 13 to 18, wherein the method further comprises:
storing a user profile;
interpreting the context of the animated video content requested by a user; and
choosing a digital content object to be displayed based on at least one of the stored user profile, an animated video content context and/or the time of day.

20. The method of claim 19, wherein the method further comprises choosing an animated video content object to be displayed based on a digital content object class of the chosen digital content object and at least one of the stored user profile, an animated video content context and/or the time of day.

21. The method according to one of claims 13 to 20, wherein the method further comprises integrating and tracking a placeholder object within the animated video content object and wherein the digital content object is positioned within the placeholder object being displayed.

22. The method according to one of claims 13 to 19, wherein the position of the digital content object is tracked within the animated video content object such that the digital content object is re-rendered matching the virtual video meta-data according to the viewing angle of the frame of the animated video content object currently being displayed.

23. The method according to claim 17, wherein the digital content object is re-rendered such that any of the frames of the movie is re-rendered in real-time.

24. The method according to any of claims 13 to 23, wherein the method further comprises means for redirecting a user upon request wherein the displayed digital content object is enriched with meta-data such that the user is redirected upon request according to the meta-data.

25. A computer-readable medium having stored thereon computer-readable instructions that when run on a computer are configured to perform the steps of the method of any of claims 13 to 24.
